# EUROPEAN PATENT SPECIFICATION

(11) **EP 3 657 981 B1**
(45) Date of publication and mention of the grant of the patent: **24.08.2022**
(21) Application number: 18753245.2
(22) Date of filing: 20.07.2018
(51) Int. Cl.: A45F 3/04, B62J 27/00

(54) **AIRBAG BACKPACK FOR MOTORCYCLE USE**
AIRBAG-RUCKSACK FÜR MOTORRAD
SAC À DOS DOTÉ D'UN COUSSIN DE SÉCURITÉ GONFLABLE POUR UTILISATION DE MOTOCYCLETTE

(30) Priority: 28.07.2017 IT 201700087108
(43) Date of publication of application: 03.06.2020
(73) Proprietor: Qooder S.A., 6833 Vacallo (CH)
(72) Inventor: MARABESE, Riccardo, 21013 Gallarate (VA) (IT); PANZIERA, Edoardo, 6945 Origlio (CH)
(74) Representative: Savoca, Agatino
(86) International application number: PCT/IB2018/055426
(87) International publication number: WO 2019/021136

(56) References cited:
- EP-A1- 2 974 773
- WO-A1-2009/121213
- WO-A1-2014/015692
- WO-A1-2016/148592
- US-A- 6 158 380
- US-A1- 2014 203 056

## Description

### FIELD OF THE INVENTION

The present invention relates to a wearable backpack for transporting personal effects, laptops and/or other objects of any nature, characterised in that it comprises, placed in a dedicated separate technical compartment, an airbag device that can be activated by means of a cable connectable to the motorcycle.

### STATE OF THE ART

In the sector, different types of airbags are known, wearable by the motorcyclist driving the motorcycle and/or by the passenger and connected to the motorcycle by means of a drive cable, so that, in case of accident in which the motorcyclist and/or the passenger is/are thrown from the motorcycle, the tensioning of the cable immediately activates the airbag, which instantaneously fills with air or with another gas.

According to known solutions, the airbag device then generally comprises a bag configured to inflate instantaneously by effect of a drive device, in turn comprising a small tank of air or other gas that is activated by an actuator connected to such cable that is connected to the vehicle.

These known solutions have in common the fact that the airbag is a dedicated accessory, and does not perform any other function.

Known airbags for motorcyclists are then, in practice, vests wearable over other technical clothing, for example over the motorcycle jacket.

However, this entails numerous drawbacks that hitherto have limited their spread.

First of all, a vest with airbag that does not serve other functions is an accessory which the motorcyclist tends to wear prevalently in long trips, or in any case not in everyday use. In particular, urban use for example by drivers of scooters in the city traffic, which is a use that exposes the motorcyclist to the highest risks of falls and/or accidents, is disincentivised by multiple aspects.

A first aspect comprises the fact that upon dismounting from the vehicle the airbag vest has to be stored in a pannier, if the vehicle is provided with bags and/or panniers, or has to be carried along.

In the first case, thus assuming that the motorcycle or the scooter is provided with bags and/or pannier and if there is sufficient space after placing the helmet back, for example, and/or the technical jacket, to position said airbag vest therein, it is at risk of being stolen, both if the vehicle itself is stolen and in the case, which unfortunately is far from rare, of forced opening of the bag or pannier.

On the other hand, in the case where the vehicle is not provided with bags and/or panniers, or if there is no room in such bags and/or storage boxes to store the airbag vest, the user has to carry the vest along.

As known to anyone who has ever used a motorcycle or a motor vehicle in general, the motorcyclist generally wears protective technical clothing, which is already rather bulky in itself, and they have with them at least one helmet, protective gloves and so on.

The motorcyclist and/or scooter user has therefore many technical accessories and clothing items that make them heavier when dismounting from the vehicle and that need to be stored.

In case of daily use of the motor vehicle, and in particular in case of city use of the motorcycle or scooter for urban transports linked to the working activity, the motorcyclist and/or scooter user generally has with them at least a backpack or a bag where they store working documents, pc and/or tablets and so on.

If they wear this backpack on their back when using the vehicle, it is clear that use of a known vest-airbag is altogether precluded.

On the other hand, in the case where a motorcyclist stores the computer backpack or the bag in the pannier or places it on the footboard of the scooter while driving, they will be able to wear the airbag vest but they will have other drawbacks.

A first drawback can be linked to the fact that, habitually, the scooter user or motorcyclist who makes urban use of the motor vehicle to go to work does not wear, in the vast majority of cases, protective clothing but rather formal clothing, for example a suit, with trousers, jacket and tie.

The urban motorcyclist who has to wear the known airbag vest over the jacket of the formal work suit will not be very happy with that.

The known airbag vest, indeed, when worn, must necessarily be very tight, close-fitting to the chest and to the back, held in place by adjustable belts and shoulder straps that must prevent all movement of the vest in case of fall.

In addition, known vests are generally made in technical materials that are not very comfortable if not worn over a technical motorcycle jacket, so that the airbag vest will be found uncomfortable if worn over city clothing, such as a suit or the like, and will irreparably rumple the suit.

Although such airbag vests have already been known on the market for several years, these drawbacks make this life-saving accessory essentially completely unused in the city use, where, as already stated, the motorcyclist/scooter user is particularly exposed to the risk of accidents and/or of fall.

### SUMMARY OF THE INVENTION

A specific task of the present invention is to fix the drawbacks left unresolved by known airbag vests, in particularly providing a new type of safety device of the airbag type that also performs a different utility function or, vice versa, to provide a wearable backpack in which the user can insert a plurality of personal objects, even a laptop, a tablet or the like, and that also incorporates an airbag device within. A similar device, whcih is considered forming the closest prior art, is known from US 2014/0203056 A1. This device is a backpack for cyclists or motorcyclists, that has airbags incorporated in the straps of the backpack and provides a receiving space for other belongings.

Within this task, a purpose of the present invention is to provide a wearable backpack comprising an airbag suitable to be worn both over motorcycle technical clothing and over non-technical clothing with a high level of comfort.

An additional purpose of the present invention consists in providing an airbag backpack that is easily and comfortably usable in the daily and urban use also of scooters and mopeds by young people who use scooters and/or mopeds usually lacking panniers and/or bags and who wear therefore the backpack to go to school even when driving the vehicle.

Similarly, a purpose of the present invention is to provide an airbag backpack that is easily and comfortably usable in the daily and city use also of scooters and the like by professionals who go to work and who normally store laptops, tablets, working documents and the like in the backpack.

This task, as well as the aforementioned purposes and others that will become clear below, are achieved by a wearable backpack comprising an airbag device according to claim 1.

Further features of the wearable backpack comprising an airbag device according to the present invention are the subject of the dependent claims.

### LIST OF FIGURES

The features and the advantages of the wearable backpack comprising an airbag device according to the present invention will become cleared from the following detailed description, provided in exemplifying and non-limiting form, referred to the accompanying schematic drawings in which:
- Figure 1 shows an overall schematic side view of the backpack according to the present invention in a rest configuration of the airbag device;
- Figure 2 shows an overall schematic side view of the backpack according to the present invention in a working configuration of the airbag device;

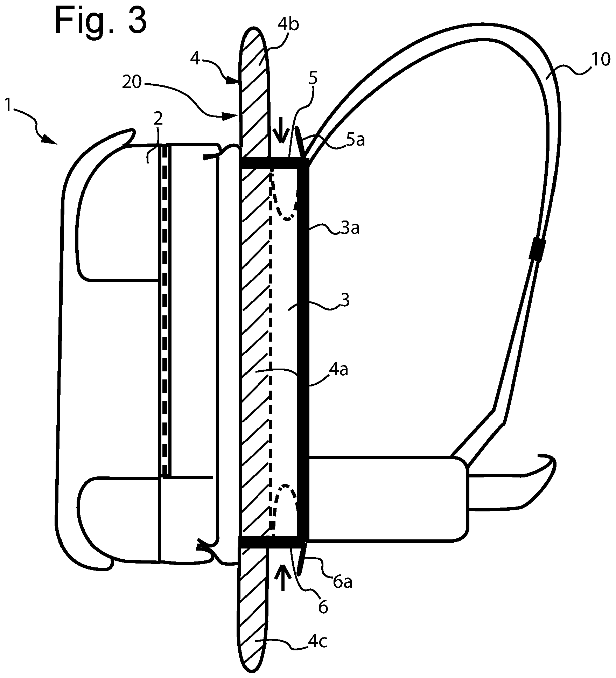

- Figure 3 shows an overall schematic side view of the backpack according to the invention in the working condition of figure 2.

### DETAILED DESCRIPTION OF THE INVENTION

In the accompanying figures, views of the backpack provided with airbag device according to the present invention are shown.

With particular reference to the accompanying figures, the wearable backpack **1** according to the invention comprises at least one main compartment **2** configured so as it is possible to insert personal belongings, laptops, tablets and the like.

Advantageously, said main compartment **2** comprises for this purpose a plurality of sections, advantageously at least one pocket or one section of suitable dimensions to house a portable pc.

Advantageously, said main compartment **2** may in turn be divided into a plurality of separate compartments, each closed by a specific zip fastener or the like.

The wearable backpack 1 according to the invention will also comprise, separate from said main compartment **2**, at least one technical compartment **3** into which an airbag device **20** is inserted. Said technical compartment **3** is found between said main compartment **2** and a wall **3a** which constitutes the backrest of the backpack **1** which comes into contact with the user's back when the backpack is put on.

Said airbag device **20** is configured so as to assume a first rest configuration in which the airbag device **20**, which comprises an airbag sack **4**, is deflated and folded in said technical compartment **3**, thus being completely contained in said technical compartment **3**, and a working configuration in which said airbag sack **4** of said airbag device **20** is filled with air or with gas.

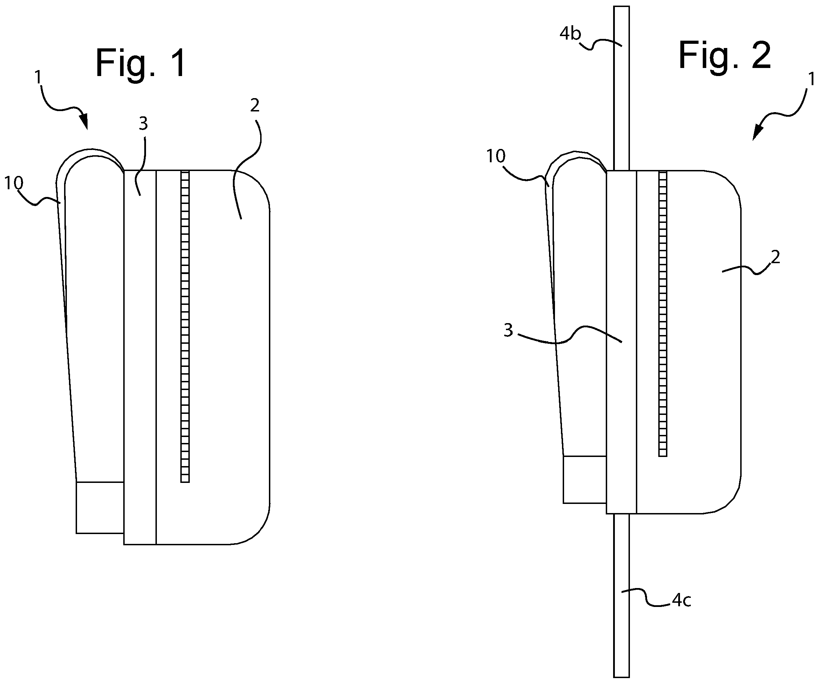

When in its working configuration, the airbag sack **4** is filled with air and will, according to the present invention illustrated in the accompanying figures, also project from said technical compartment outwardly **3**, from above and below said technical compartment **3.** The terms front, behind, above, below and the like are all referred to the backpack worn by the user. In particular, therefore, the main compartment **2** will be placed in front with respect to the shoulder straps **10** of the backpack, and the technical backpack **3** will be placed behind with respect to said main compartment **2.** With reference to figure 2, for example, it is noted that the airbag sack **4** protrudes from said technical compartment **3** outwardly both from above, where a first foldable portion **4b** is illustrated, and from below, where a second foldable portion **4c** is illustrated.

To prevent potential shocks consequent to the impact of the backpack with the ground or with other vehicles from being transferred to the user's back, the airbag sack **4** comprises advantageously a central portion **4a** contained in said technical compartment **3** and configured so that, in the working configuration in which the airbag sack **4** is inflated, it occupies substantially the entire extension in height, and preferably the entire extension in width, of the technical compartment **3** itself, thus reproducing the shape of the backrest **3a** of the backpack which is in contact with the user's back when the backpack is worn. Advantageously, according to a preferred embodiment of the present invention a flexible but semi-rigid sheet, for example a thin sheet of PVC or other polymeric material having similar characteristics of lightness, flexibility and resistance to perforation, may be interposed between said technical compartment **3** and said main compartment **2.**

According to the invention and as shown in the accompanying figures, the technical compartment **3** is provided with two recloseable openings to allow the outwards expansion of said airbag sack **4.**

Advantageously, according to the preferred embodiment of the invention said airbag device **20** comprises at least one airbag sack **4** in turn comprising a central portion **4a** having, in a plan view, a substantially rectangular profile that follows the profile of the backrest **3a** of the backpack **1** and completely contained in said technical compartment **3**, and at least one foldable portion **4b**, **4c** configured to be folded, in the rest configuration of the device, inside said technical compartment **3** and to expand outside said technical compartment **3** in the working configuration.

More specifically, to obtain the most effective protection for the user's back in case of falls and/or impacts in general, said airbag device **20** comprises an airbag sack **4** that comprises as stated a central portion **4a** that substantially has the same profile as the backrest **3a** of the backpack **1**, and two foldable portions, in particular an upper foldable portion **4b** and a lower foldable portion **4c.**

Said upper foldable portion **4b** and lower foldable portion **4c** are advantageously configured to extend from said technical compartment **3** at least for a sufficient extension to make it possible, when the backpack **1** is worn, to cover respectively the cervical vertebrae, until meeting the helmet of the user, and the lumbar and sacral vertebrae of the user.

To allow the outwards expansion of the technical compartment **3** of both foldable portions, upper **4b** and lower **4c**, of the airbag sack **4**, said technical compartment **3** is provided with an upper recloseable opening **5** and with a lower refoldable opening **6** to allow the outwards expansion of said airbag sack **4** both from above and below.

According to a preferred embodiment of the present invention, said recloseable upper **5** and lower **6** openings respectively comprise at least one upper closing tongue **5a** and at least one lower closing tongue **6a** each one comprising a velcro or magnet locking system in order to reversibly close said recloseable openings **5, 6** of said technical compartment **3.** Advantageously, each opening **5**, **6** may be closed by a pair of closing tongues which may at least partially be mutually superposed, thereby achieving a reversable closure by means of a velcro or magnet locking system. Advantageously, said airbag device **20** comprises as stated an airbag sack **4**, and will also comprise for the inflation of the sack at least one compressed air drive unit comprising an actuator that can be operated by a cable having a first end connected to said actuator and a second end connectable to the motor vehicle.

In addition, the backpack **1** according to the present invention comprises a main compartment **2**, that can advantageously be n turn divided into a plurality of sections.

Still more preferably, said main compartment 2 comprises a compartment provided with one or more padded walls for housing a laptop or a tablet or similar electronic devices.

The backpack **1** according to the invention must also have shoulder straps and possibly other belts that, when the backpack is worn, are positioned substantially at the waist of the user, which allow the backpack to remain stably in position on the user's back even in case of fall, impact and/or slide.

For this purpose, the backpack according to the invention will advantageously comprise adjustable shoulder straps provided with a hooking device configured to enable the two shoulder straps to be hooked to one another, said device being positioned on said shoulder straps so as to be placed, when the backpack is put on, at the user's sternum height. Preferably, the shoulder straps will be made of sufficiently soft material and/or padded to assure a high level of comfort for the user, and the backrest **3a** will also be made of appropriate material and/or appropriately padded.

Preferably, said hooking device consists of a buckle for quick release.

From the above description, the features of the backpack comprising an airbag device for motorcycle use of the present invention are clear, as well as the related advantages.

In addition, it is understood that the backpack comprising an airbag device for motorcycle use according to the present invention is susceptible to many modifications and variants, as long as they are all falling within the same scope of protection identified by the accompanying claims.

Furthermore, all the details and materials indicated by way of example can be replaced by equivalent technical elements.

## Claims

1. Wearable backpack (1) comprising at least a main compartment (2) configured so as it is possible to insert personal belongings, and, separated from said main compartment, at least one technical compartment (3) in which an airbag device (20) is inserted comprising an airbag sack (4) adapted to take a rest configuration in which said airbag sack (4) is deflated and folded in said technical compartment (3), thus being completely contained in said technical compartment (3), and a working configuration in which said airbag sack (4) is filled with air or gas and takes up said technical compartment (3) and projects at least partially outwards from said technical compartment (3),
said technical compartment (3) is obtained between said main compartment (2) and a wall (3a) which constitutes the backrest of the backpack (1) which comes into contact with the user's back when the backpack is put on,
said technical compartment (3) is provided with an upper recloseable opening (5) and with a lower recloseable opening (6) to allow said airbag sack (4) to expand outwards from above and below,
wherein in said working configuration, said airbag sack (4) projects from said technical compartment (3) both above and below said technical compartment (3).

2. Backpack (1) according to the previous claim, **characterized in that** it comprises, interposed between said technical compartment (3) and said main compartment (2), a flexible sheet of material such as PVC or the like.

3. Backpack (1), according to any one of the previous claims, **characterized in that** said technical compartment (3) is provided with at least one recloseable opening to allow said airbag sack (4) to expand outwards.

4. Backpack (1) according to the previous claim, **characterized in that** said at least one recloseable opening is provided with a closing tongue comprising a velcro or magnet locking system.

5. Backpack (1) according to any one of the previous claims, **characterized in that** said recloseable upper (5) and lower (6) openings respectively comprise at least one upper closing tongue (5a) and at least one lower closing tongue (6a) each one comprising a velcro or magnet locking system in order to reversibly close said recloseable openings (5, 6) of said technical compartment (3).

6. Backpack (1), according to one or more of the previous claims, **characterized in that** said airbag device (20) comprises at least one airbag sack (4) in turn comprising a central portion (4a) having, in a plan view, a substantially rectangular profile that follows the profile of the backrest (3a) of the backpack (1) and completely contained in said technical compartment (3), and at least one foldable portion (4b, 4c) configured to be folded, in the rest configuration, inside said technical compartment (3) and to expand outside said technical compartment (3) in the working configuration.

7. Backpack (1) according to the previous claim, **characterized in that** said airbag sack (4) comprises an upper foldable portion (4b) and a lower foldable portion (4c) configured to extend outwards from said technical compartment (3), in the working configuration, respectively above and below said technical compartment (3).

8. Backpack (1), according to one or more of the previous claims, **characterized in that** said airbag device (20) additionally comprises a compressed air drive unit comprising an actuator that can be operated by a cable having a first end connected to said actuator and a second end connectable to the motor vehicle.

9. Backpack (1), according to one or more of the previous claims, **characterized in that** said main compartment (2) is in turn divided into a plurality of sections.

10. Backpack (1), according to one or more of the previous claims, **characterized in that** said main compartment (2) comprises a compartment provided with one or more padded walls for housing a laptop or a tablet or similar electronic devices.

11. Backpack (1), according to one or more of the previous claims, **characterized in that** it comprises adjustable shoulder straps (10) provided with a hooking device configured to enable the two shoulder straps to be hooked to one another, said device being positioned on said shoulder straps (10) so as to be placed, when the backpack is put on, at the user's sternum height.

12. Backpack (1), according to one or more of the previous claims, **characterized in that** said hooking device consists of a buckle for quick release.

## Patentansprüche

1. Tragbarer Rucksack (1) mit mindestens einem Hauptfach (2), das so ausgebildet ist, dass es möglich ist, persönliche Gegenstände einzubringen, und, getrennt von dem Hauptfach, mindestens einem Technikfach (3), in dem eine Airbagvorrichtung (20) eingebracht ist, die einen Airbagsack (4) aufweist, der dazu angepasst ist, eine Ruhekonfiguration, in der der Airbagsack (4) entleert und gefaltet in dem Technikfach (3) ist, so dass er somit vollständig in dem Technikfach (3) enthalten ist, und eine Arbeitskonfiguration, in der der Airbagsack (4) mit Luft oder Gas gefüllt ist und das Technikfach (3) einnimmt und zumindest teilweise von dem Technikfach (3) nach außen vorsteht, einzunehmen,
bei dem das Technikfach (3) zwischen dem Hauptfach (2) und einer Wand (3a), die die Rückenstütze des Rucksacks (1) bildet, die mit dem Rücken des Benutzers in Kontakt kommt, wenn der Rucksack aufgesetzt wird, erhalten wird,
bei dem das Technikfach (3) mit einer oberen wiederverschließbaren Öffnung (5) und mit einer unteren wiederverschließbaren Öffnung (6) versehen ist, so dass zugelassen wird, dass der Airbagsack (4) von oberhalb und unterhalb nach außen expandiert,
bei dem in der Arbeitskonfiguration der Airbagsack (4) von dem Technikfach (3) sowohl oberhalb als auch unterhalb des Technikfachs (3) vorsteht.

2. Rucksack (1) nach dem vorhergehenden Anspruch, **dadurch gekennzeichnet, dass** er, zwischen dem Technikfach (3) und dem Hauptfach (2) eingefügt, ein flexibles Blatt eines Materials, wie beispielsweise PVC oder dergleichen, aufweist.

3. Rucksack (1) nach einem der vorhergehenden Ansprüche, **dadurch gekennzeichnet, dass** das Technikfach (3) mit mindestens einer wiederverschließbaren Öffnung versehen ist, so dass zugelassen wird, dass der Airbagsack (4) nach außen expandiert.

4. Rucksack (1) nach dem vorhergehenden Anspruch, **dadurch gekennzeichnet, dass** die mindestens eine wiederverschließbare Öffnung mit einer Verschlusslasche versehen ist, die ein Klett- oder Magnetverschlusssystem aufweist.

5. Rucksack (1) nach einem der vorhergehenden Ansprüche, **dadurch gekennzeichnet, dass** die wiederverschließbaren oberen (5) und unteren (6) Öffnungen mindestens eine obere Verschlusslasche (5a) bzw. mindestens eine untere Verschlusslasche (6a) aufweisen, die jeweils ein Klett- oder Magnetverschlusssystem zum reversiblen Verschließen der wiederverschließbaren Öffnungen (5, 6) des Technikfachs (3) aufweist.

6. Rucksack (1) nach einem oder mehreren der vorhergehenden Ansprüche, **dadurch gekennzeichnet, dass** die Airbagvorrichtung (20) mindestens einen Airbagsack (4) aufweist, der wiederum einen mittleren Abschnitt (4a), der in einer Draufsicht ein im Wesentlichen rechteckiges Profil aufweist, das dem Profil der Rückenstütze (3a) des Rucksacks (1) folgt und vollständig in dem Technikfach (3) enthalten ist, und mindestens einen faltbaren Abschnitt (4b, 4c), der dazu ausgebildet ist, in der Ruhekonfiguration innerhalb des Technikfachs (3) gefaltet zu sein und in der Arbeitskonfiguration außerhalb des Technikfachs (3) zu expandieren, aufweist.

7. Rucksack (1) nach dem vorhergehenden Anspruch, **dadurch gekennzeichnet, dass** der Airbagsack (4) einen oberen faltbaren Abschnitt (4b) und einen unteren faltbaren Abschnitt (4c), die dazu ausgebildet sind, sich in der Arbeitskonfiguration oberhalb bzw. unterhalb des Technikfachs (3) von dem Technikfach (3) nach außen zu erstrecken, aufweist.

8. Rucksack (1) nach einem oder mehreren der vorhergehenden Ansprüche, **dadurch gekennzeichnet, dass** die Airbagvorrichtung (20) zusätzlich eine Kompressionsluftantriebseinheit aufweist, die einen Aktuator aufweist, der durch ein Kabel, das ein erstes Ende, das mit dem Aktuator verbunden ist, und ein zweites Ende, das mit dem Motorfahrzeug verbindbar ist, aufweist, betätigt werden kann.

9. Rucksack (1) nach einem oder mehreren der vorhergehenden Ansprüche, **dadurch gekennzeichnet, dass** das Hauptfach (2) wiederum in eine Mehrzahl von Abschnitten unterteilt ist.

10. Rucksack (1) nach einem oder mehreren der vorhergehenden Ansprüche, **dadurch gekennzeichnet, dass** das Hauptfach (2) ein Fach, das mit einer oder mehreren gepolsterten Wänden versehen ist, zum Aufnehmen eines Laptops oder eines Tablets oder ähnlicher elektronischer Vorrichtungen aufweist.

11. Rucksack (1) nach einem oder mehreren der vorhergehenden Ansprüche, **dadurch gekennzeichnet, dass** er anpassbare Schultergurte (10) aufweist, die mit einer Hakenvorrichtung versehen sind, die dazu ausgebildet ist, zu ermöglichen, dass die zwei Schultergurte aneinander gehakt werden können, bei dem die Vorrichtung so auf den Schultergurten (10) positioniert ist, dass sie, wenn der Rucksack aufgesetzt wird, in der Höhe des Brustbeins des Benutzers platziert ist.

12. Rucksack (1) nach einem oder mehreren der vorhergehenden Ansprüche, **dadurch gekennzeichnet, dass** die Hakenvorrichtung aus einer Schnalle für eine Schnelllösung besteht.

## Revendications

1. Sac à dos portable (1) comprenant au moins un compartiment principal (2) configuré de manière à permettre l'introduction d'effets personnels à l'intérieur de celui-ci, et, séparé dudit compartiment principal, au moins un compartiment technique (3) dans lequel il est introduit un dispositif de coussin de sécurité gonflable (20) comprenant une enveloppe de coussin de sécurité gonflable (4) apte à adopter une configuration de repos dans laquelle ladite enveloppe de coussin de sécurité gonflable (4) est dégonflée et repliée dans ledit compartiment technique (3), en étant ainsi complètement contenue dans ledit compartiment technique (3), et une configuration de fonctionnement dans laquelle ladite enveloppe de coussin de sécurité gonflable (4) est remplie d'air ou de gaz et occupe tout ledit compartiment technique (3) et fait saillie au moins partiellement vers l'extérieur depuis ledit compartiment technique (3),
ledit compartiment technique (3) est obtenu entre ledit compartiment principal (2) et une paroi (3a) qui constitue le dossier du sac à dos (1) qui vient au contact du dos de l'utilisateur lorsque le sac à dos est porté par l'utilisateur,
ledit compartiment technique (3) est pourvu d'une ouverture refermable supérieure (5) et d'une ouverture refermable inférieure (6) pour permettre le déploiement de ladite enveloppe de coussin de sécurité gonflable (4) vers l'extérieur depuis le dessus et le dessous,
dans lequel, dans ladite configuration de fonctionnement, ladite enveloppe de coussin de sécurité gonflable (4) fait saillie depuis ledit compartiment technique (3) à la fois au-dessus et au-dessous dudit compartiment technique (3).

2. Sac à dos (1) selon la revendication précédente, **caractérisé en ce qu'**il comprend, interposée entre ledit compartiment technique (3) et ledit compartiment principal (2), une feuille de matériau souple comme du PVC ou similaire.

3. Sac à dos (1) selon l'une quelconque des revendications précédentes, **caractérisé en ce que** ledit compartiment technique (3) est pourvu d'au moins une ouverture refermable pour permettre le déploiement de ladite enveloppe de coussin de sécurité gonflable (4) vers l'extérieur.

4. Sac à dos (1) selon la revendication précédente, **caractérisé en ce que** ladite au moins une ouverture refermable est pourvue d'une languette de fermeture comprenant un système de verrouillage velcros ou par aimant.

5. Sac à dos (1) selon l'une quelconque des revendications précédentes, **caractérisé en ce que** lesdites ouvertures refermables supérieure (5) et inférieure (6) comprennent respectivement au moins une languette de fermeture supérieure (5a) et au moins une languette de fermeture inférieure (6a), chacune d'elles comprenant un système de verrouillage velcros ou par aimant afin de fermer, de manière réversible, lesdites ouvertures refermables (5, 6) dudit compartiment technique (3).

6. Sac à dos (1) selon une ou plusieurs des revendications précédentes, **caractérisé en ce que** ledit dispositif de coussin de sécurité gonflable (20) comprend au moins une enveloppe de coussin de sécurité gonflable (4) qui comprend à son tour une partie centrale (4a) comportant, dans une vue en plan, un profil sensiblement rectangulaire qui suit le profil du dossier (3a) du sac à dos (1) et contenue complètement dans ledit compartiment technique (3), et au moins une partie repliable (4b, 4c) configurée pour être repliée, dans la configuration de repos, à l'intérieur dudit compartiment technique (3) et pour se déployer à l'extérieur dudit compartiment technique (3) dans la configuration de fonctionnement.

7. Sac à dos (1) selon la revendication précédente, **caractérisé en ce que** ladite enveloppe de coussin de sécurité gonflable (4) comprend une partie repliable supérieure (4b) et une partie repliable inférieure (4c) configurées pour s'étendre vers l'extérieur depuis ledit compartiment technique (3), dans la configuration de fonctionnement, respectivement au-dessus et au-dessous dudit compartiment technique (3).

8. Sac à dos (1) selon une ou plusieurs des revendications précédentes, **caractérisé en ce que** ledit dispositif de coussin de sécurité gonflable (20) comprend en outre une unité d'entraînement d'air comprimé comprenant un actionneur qui peut être déclenché par un câble comportant une première extrémité reliée audit actionneur et une seconde extrémité pouvant être reliée au véhicule motorisé.

9. Sac à dos (1) selon une ou plusieurs des revendications précédentes, **caractérisé en ce que** ledit compartiment principal (2) est à son tour divisé en une pluralité de sections.

10. Sac à dos (1) selon une ou plusieurs des revendications précédentes, **caractérisé en ce que** ledit compartiment principal (2) comprend un compartiment pourvu d'une ou plusieurs parois rembourrées pour loger un ordinateur portable ou une tablette ou des dispositifs électroniques similaires.

11. Sac à dos (1) selon une ou plusieurs des revendications précédentes, **caractérisé en ce qu'**il comprend des bretelles réglables (10) pourvues d'un dispositif d'accrochage configuré pour permettre d'accrocher les deux bretelles l'une à l'autre, ledit dispositif étant positionné sur lesdites bretelles (10) de manière à être placé, lorsque le sac à dos est porté, à la hauteur du sternum de l'utilisateur.

12. Sac à dos (1) selon une ou plusieurs des revendications précédentes, **caractérisé en ce que** ledit dispositif d'accrochage se compose d'une boucle à libération rapide.
